# EUROPEAN PATENT SPECIFICATION

(11) **EP 2 797 159 B1**
(45) Date of publication and mention of the grant of the patent: **29.06.2016**
(21) Application number: 14165638.9
(22) Date of filing: 23.04.2014
(51) Int. Cl.: H01M 10/613, H01M 10/6557, H01M 10/6563, H01M 2/10, B60L 11/18, H01M 10/625

(54) **Battery pack**
Batteriepack
Bloc-batteries

(30) Priority: 24.04.2013 KR 20130045214
(43) Date of publication of application: 29.10.2014
(73) Proprietor: Samsung SDI Co., Ltd., Yongin-si, Gyeonggi-do (KR)
(72) Inventor: Yang, Seung-Woo, Yongin-si, Gyeonggi-do (KR); Cha, In-Hwan, Yongin-si, Gyeonggi-do (KR)
(74) Representative: Niepelt, Carsten

(56) References cited:
- EP-A1- 0 964 470
- EP-A1- 2 565 960
- WO-A1-2007/007503

## Description

### BACKGROUND

### 1. Field

Embodiments of the invention relate to a battery pack.

### 2. Description of the Related Art

A high-power battery module using a non-aqueous electrolyte with high energy density has recently been developed. The high-power battery module is configured as a large-capacity battery module manufactured by connecting a plurality of battery cells in series so as to be used in driving motors of devices requiring high power, e.g., electric vehicles and the like. Further, a battery pack may be configured by electrically connecting such a plurality of battery modules to one another.

WO 2007/007503 discloses a battery pack having a bypass flow channel arranged underneath the battery pack thereby diverting part of a flow path.

### SUMMARY

Embodiments are directed to a battery pack including a first battery module group including one or more battery modules, a second battery module group including one or more battery modules, and aligned with the first battery module group, a housing accommodating the first and second battery module groups therein, and a guide member between the first and second battery module groups, and adjacent to one of the battery modules of the first battery module group. The guide member divides a flow path of a heat exchange medium passing through the first battery module group. The guide member includes a main body portion having one surface opened to form a space portion therein, and first and second connection tubes respectively provided at a first side of the main body portion and a second side opposite to the first side of the main body portion.

The one opened surface of the main body portion may face the first battery module group. The first and second connection tubes may be extended to face an opposite direction with respect to the first battery module group.

Openings may be provided at each of the first and second sides of the main body portion. The first and second connection tubes may be connected to respective openings at the first and second sides.

At least one portion of the heat exchange medium passing through the first battery module group may be discharged through the first and second connection tubes via the space portion of the guide member.

A cross-section of the first and second connection tubes may be formed in a polygonal or circular shape having a through-hole therein.

The battery pack may further include one or more side members, each having a through-hole therein. The one or more side members may be adjacent to the guide member. The through-hole may have a size corresponding to a respective one of the first and second connection tubes.

The battery pack may further include one or more side members, each having a through-hole therein. The one or more side members may be provided between an inner surface of the housing and a battery module of the second battery module group adjacent to the first battery module group.

A sealing member may be between the battery module of the first battery module group and the guide member.

The housing may include a first surface having an inlet formed therein, and a second surface opposite to the first surface and having an outlet formed therein. The first and second battery module groups may be sequentially aligned between the inlet and the outlet. Sides of the battery module may face the inlet and the outlet.

The inlet may include a main inlet at a central portion thereof the first surface, and one or more sub-inlets at left and right sides, respectively, of the main inlet and spaced apart from each other, with the main inlet therebetween.

The outlet may include a main outlet at a central portion of the second surface, and one or more sub-outlets at left and right sides, respectively, of the main outlet and spaced apart from each other, with the main outlet therebetween.

The first and second battery module groups may be spaced apart from at least one portion of an inner surface of the housing. The sub-inlets or the sub-outlets may communicate with a space between the inner surface of the housing and the first and second battery module groups.

The battery modules of the first battery module group may be spaced apart from each other by a first distance. The battery modules of the second battery module group may be spaced apart from each other by a second distance. The first and second battery module groups may be spaced apart from each other by a third distance. The third distance may be greater than the first or second distance.

The battery pack may include a first heat exchange flow path passing through the first battery module group, a divided heat exchange flow path passing between an outer surface of the second battery module group and an inner surface of the housing, one or more second heat exchange flow paths passing between an outer surface of the first battery module group and the inner surface of the housing, and a convergence heat exchange flow path passing through the second battery module group. The first heat exchange flow path is divided into the divided heat exchange flow path by passing through the guide member. The one or more second heat exchange flow paths converge to form the convergence heat exchange flow path at a back-end of the guide member.

The divided heat exchange flow path may pass between the outer surface of the second battery module group and the inner surface of the housing. The convergence heat exchange flow path may pass through the second battery module group.

The housing may include a first surface having an inlet therein, and a second surface opposite to the first surface and having an outlet therein. The first and second battery module groups may be sequentially aligned between the inlet and the outlet. Sides of the battery modules may face the inlet and the outlet.

The inlet may include a main inlet at a central portion of the first surface, and one or more sub-inlets at the left and right sides, respectively, of the main inlet while being spaced apart from each other with the main inlet therebetween. The outlet may include a main outlet at a central portion of the second surface, and one or more sub-outlets at the left and right sides, respectively, of the main outlet while being spaced apart from each other with the main outlet interposed therebetween.

The first heat exchange flow path may communicate with the main inlet. The second heat exchange flow path may communicate with the sub-inlet. The divided heat exchange flow path may communicate with the sub-outlet. The convergence heat exchange flow path may communicate with the main outlet.

### BRIEF DESCRIPTION OF THE DRAWINGS

Features will become apparent to those of skill in the art by describing in detail exemplary embodiments with reference to the attached drawings in which:
FIG. 1 illustrates a perspective view of a battery pack according to an embodiment.
FIG. 2 illustrates an exploded perspective view of the battery pack illustrated in FIG. 1.
FIG. 3A illustrates a perspective view showing the guide member and side members illustrated in FIG. 2.
FIG. 3B illustrates a side view of the guide member illustrated in FIG. 3A.
FIG. 4 illustrates a perspective view showing a battery module and the guide member according to the embodiment.
FIG. 5 illustrates a schematic view showing an inside of the battery pack according to the embodiment.
FIG. 6 illustrates a schematic view showing the flow of a heat exchange medium in the battery pack according to the embodiment.
FIG. 7 illustrates a perspective view showing a battery module and a guide member according to another embodiment.
FIG. 8 illustrates a perspective view showing a battery module and a guide member according to still another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, dimensions may be exaggerated for clarity of illustration. Like reference numerals refer to like elements throughout.

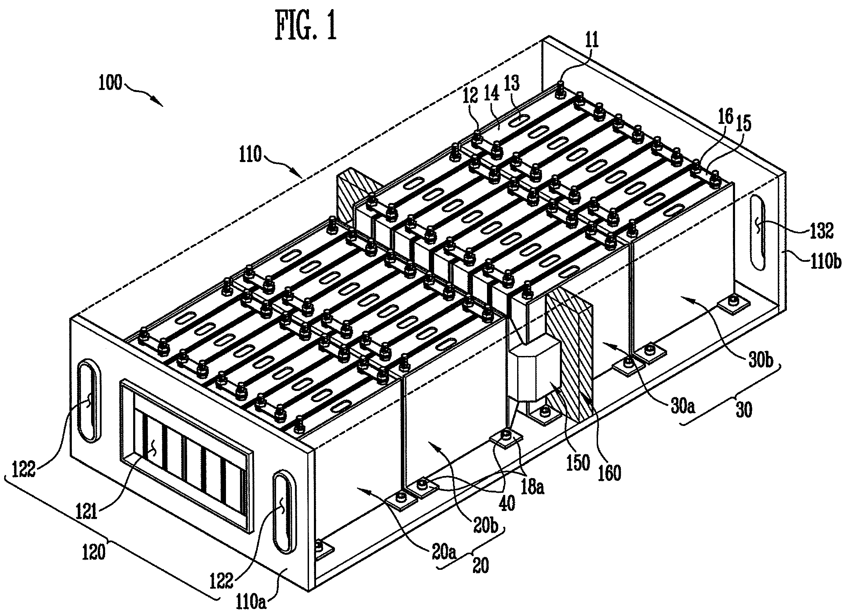

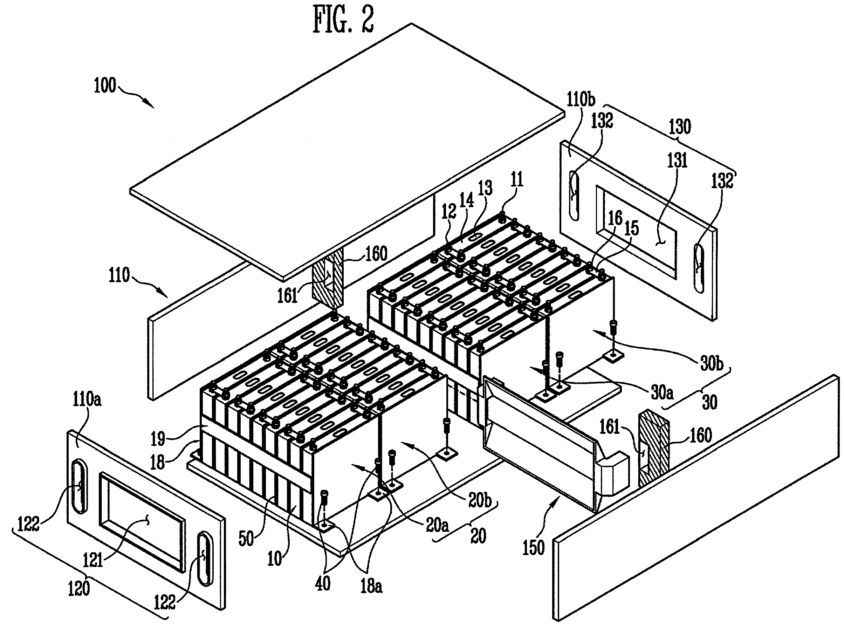

FIG. 1 illustrates a perspective view of a battery pack according to an embodiment. FIG. 2 illustrates an exploded perspective view of the battery pack illustrated in FIG. 1.

The battery pack 100 according to this embodiment includes a first battery module group 20 including one or more battery modules 20a and 20b; a second battery group module 30 including one or more battery modules 30a and 30b; a housing 110 accommodating the first and second battery module groups 20 and 30 therein; and a guide member 150 provided between the first and second battery module groups 20 and 30, and adjacent to the battery module 20b of the first battery module group 20. The guide member 150 may divide the flow path of a heat exchange medium passing through the first battery module group 20.

The battery pack 100 further includes one or more side members 160, each having a through-hole 161 provided therein. The side member 160 may be provided between an inner surface of the housing 110 and the battery module 30a of the second battery module group 30 adjacent to the first battery module group 20.

The battery pack 100 may be provided by aligning one or more battery module groups 20 and 30 therein. The battery module groups 20 and 30 may include first and second battery module groups 20 and 30 made up of one or more battery modules 20a, 20b, 30a, and 30b. The plurality of battery modules 20a, 20b, 30a, and 30b may be fixed by one or more end plates 18 and one or more connection members 19 after a plurality of battery cells 10 are aligned. A partition wall 50 may be provided between neighboring battery cells 10. The partition wall 50 may allow the battery cells 10 to be spaced apart from each other, thereby forming a space. A mounting portion 18a extended to contact a bottom surface of the housing 110 may be provided at a lower portion of the end plate 18. The plurality of battery modules 20a, 20b, 30a, and 30b may be fixed to the bottom surface of the housing 110 using a bolt 40 or the like.

The battery cell 10 may include a battery case having an opened surface and an electrode assembly and an electrolyte, which may be accommodated in the battery case. The battery case may be hermetically sealed with a cap assembly 14 having a positive electrode terminal 11, a negative electrode terminal 12 and a vent 13. The electrode assembly and the electrolyte generate energy through an electrochemical reaction therebetween, and the generated energy is transferred to the outside of the battery cell 10 through the positive and negative electrode terminals 11 and 12. The positive and negative electrode terminals 11 and 12 of adjacent battery cells 10 may be electrically connected to each other through a bus-bar 15. The bus-bar 15 may be fixed to the positive and negative electrode terminals 11 and 12 using a member such as a nut 16. The vent 13 is a safety device that may act as a passage through which gas generated inside the battery cell 10 is exhausted to the outside of the battery cell 10.

The housing 110 accommodates the first and second battery module groups 20 and 30 therein. A heat exchange medium for performing a heat exchange with the battery cells by passing through the first and second battery module groups 20 and 30 may be provided inside the housing 110. The housing 110 includes a first surface 110a having an inlet 120 formed therein, and a second surface 110b opposite to the first surface 110a and having an outlet 130 formed therein. The first and second battery module groups 20 and 30 may be sequentially aligned between the inlet and outlet 120 and 130. Side surfaces of the battery modules 20a, 20b, 30a, and 30b may face the inlet and outlet 120 and 130.

The first battery module group 20 may include first and second battery modules 20a and 20b sequentially provided therein. The second battery module group 30 may include third and fourth battery modules 30a and 30b sequentially provided therein. The first to fourth battery modules 20a, 30b, 30a, and 30b may be sequentially aligned between the inlet and outlet 120 and 130. Thus, the first battery module 20a may be adjacent to the inlet 120, and the fourth battery module 30b may be adjacent to the outlet 130. It is to be understood that the number of battery modules constituting the first and second battery module groups 20 and 30 may be variously modified.

The inlet 120 may include a main inlet 121 provided at a central portion of the first surface 110a, and one or more sub-inlets 122 respectively provided at the left and right sides of the main inlet 121, while being spaced apart from each other with the main inlet 121 interposed therebetween. The outlet 130 may include a main outlet 131 provided at a central portion of the second surface 110b, and one or more sub-outlets 132 respectively provided at the left and right sides of the main outlet 132, while being spaced apart from each other with the main outlet 132 interposed therebetween.

The first and second battery module groups 20 and 30 may be spaced apart from at least one portion of the inner surface of the housing 110. The sub-inlets 122 and/or the sub-outlets 132 may be provided to communicate with the space between the inner surface of the housing 110 and the first and second battery module groups 20 and 30. The main inlet 121 and/or the main outlet 131 may be provided to face the first and second battery module groups 20 and 30.

The battery pack 100 according to this embodiment may include one or more guide members 150 between the first and second battery module groups 20 and 30. The guide members 150 may divide the flow path of the heat exchange medium that flows into the battery pack 100 through the inlet 120 of the housing 110. According to an implementation, one guide member 150 may be between the first and second battery module groups 20 and 30.

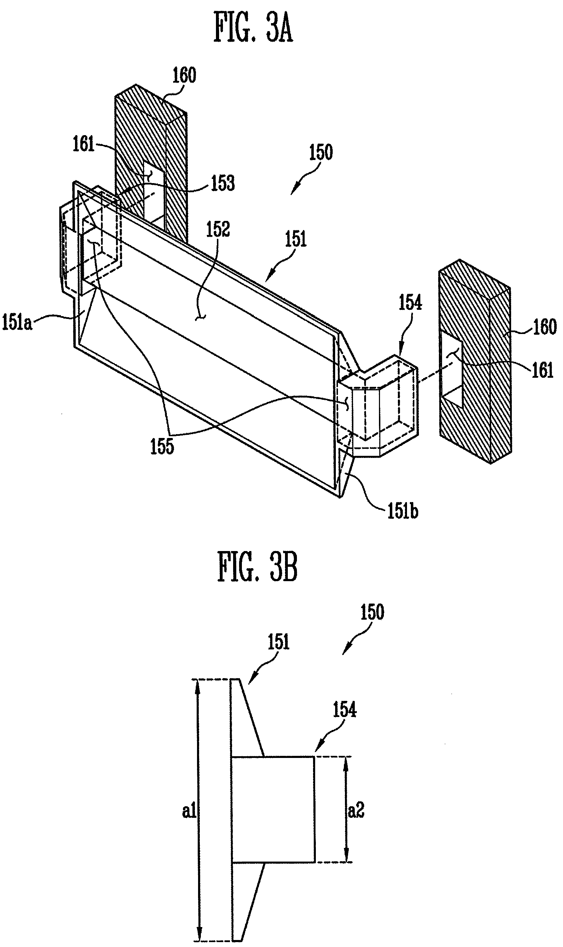

FIG. 3A illustrates a perspective view showing the guide member 150 and side members 160 illustrated in FIG. 2. FIG. 3B illustrates a side view of the guide member of FIG. 3A.

Referring to FIGS. 3A and 3B, the guide member 150 may include a main body portion 151 opened to have a space portion 152 therein, and first and second connection tubes 153 and 154 respectively provided at a first side 151a of the main body portion 151 and a second side 151b opposite to the first side 151a of the main body portion 151. The opened surface of the main body portion 151 may face the first battery module group 20, and the first and second connection tubes 153 and 154 may be extended to face the opposite direction with respect to the first battery module group 20. At least one opening 155 may be provided at each of the first and second sides 151a and 151b of the main body portion 151, and the first and second connection tubes 153 and 154 may be connected to the opening 155 provided at the first and second sides 151 a and 151 b, respectively. For example, the section of the first and second connection tubes 153 and 154 of the guide member 150 may be formed in a polygonal shape having a through-hole therein. The first or second connection tube 153 or 154 may have a width narrower than that of the first or second side 151 a or 151 b of the main body portion 151. The longitudinal length a2 of the first or second connection tube 153 or 154 may be shorter than the longitudinal length a1 of the main body portion 151.

The battery pack 100 may further include one or more side members 160. The side member 160 may be provided between the inner surface of the housing 110 and the third battery module 30a, which is a battery module of the second battery module group 30 adjacent to the first battery module group 20. The side member 160 may further include a through-hole 161 formed therein. The side member 160 may be provided adjacent to the guide member 150, and the through-hole 161 may have a size corresponding to the first or second connection tube 153 or 154. At least one portion of the first or second connection 153 or 154 may be inserted into the through-hole 161. In an implementation, the battery pack 100 may include one side member 160 on each side adjacent to the guide member 150 such that the first and second connection tubes 153 and 154 are inserted through the through-holes 161 of respective side members 160.

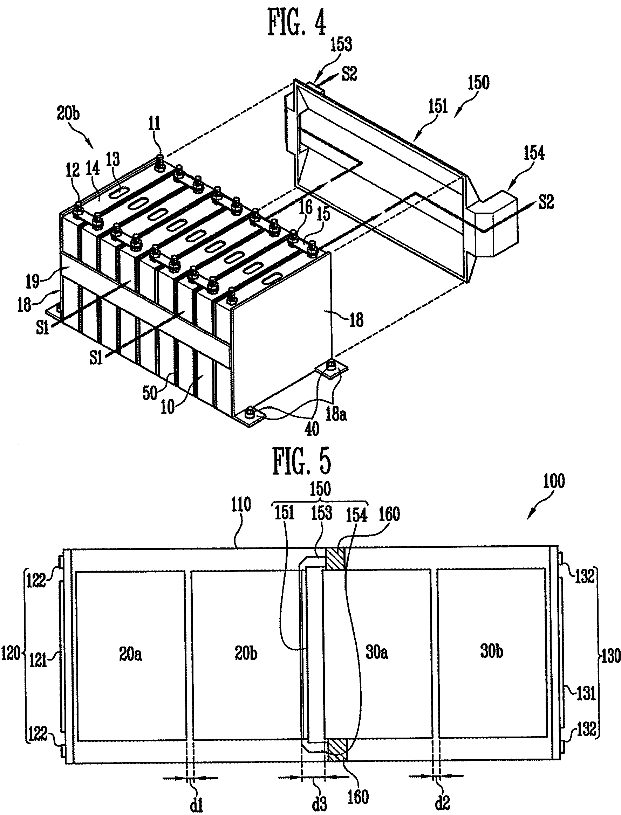

FIG. 4 illustrates a perspective view showing the battery module and the guide member according to the embodiment.

At least one portion (S1) of the heat exchange medium passing through the first battery module group 20 may be discharged through the first and second connection tubes 153 and 154 via the space portion 152 of the guide member 150 (S2). The guide member 150 may be provided adjacent to the second battery module 20b of the first battery module group 20. The opened surface of the main body portion 151 may be provided adjacent to a side of the second battery module 20b. The section of the main body portion 151 may be provided to face the side of the second battery module 20b, and the first and second connection tubes 153 and 154 may be provided between the second battery module group 30 and the inner wall of the housing 110.

For example, a low-temperature heat exchange medium may exchange heat with the heated battery cells 10 while passing through the first and second battery modules 20a and 20b of the first battery module group 20 (S1). The battery cells 10 constituting the first and second battery modules 20a and 20 are spaced apart from each other by the partition wall 50, and the heat exchange medium flows through a space provided between neighboring battery cells 10 (S1) so as to cool the battery cells 10. Subsequently, the heat exchange medium that has been heated to a relatively high temperature is accommodated in the space portion 152 of the guide member 150 and then divided through the first and second connection tubes 153 and 154 (S2). The heat exchange medium passing through the first and second connection tubes 153 and 154 may be discharged between the second battery module group 30 and the inner surface of the housing 110 via the side member 160 (see FIG. 3A).

Generally, heat is generated in a battery cell by charging/discharging of the battery cell, which may result in deterioration of the battery cell. In a battery module configured with closely packed battery cells, heat generated in each battery cell may be conducted to neighboring battery cells. Therefore, the temperature of the battery cell may be further increased. As a result, the performance of the battery cell may be deteriorated. In a serious case, issues relating to safety, such as a risk of explosion, may arise. Particularly, in a high-capacity battery pack, danger from heating may become more serious. Thus, various types of cooling devices, etc. may be used to control the temperature of battery cells. However, it may be difficult to uniformly cool battery modules in a battery pack due to the structure of the battery pack, and a variation in temperature between battery cells may result. Further, the flow of a heat exchange medium passing between the battery cells may be unequal, causing safety issues.

Embodiments provide a battery pack 100 using a guide member 150. In the battery pack 100, the flow path of a heat exchange medium that flows into the battery pack 100 through an inlet 120 and discharged through an outlet 130 may be controlled by the guide member 150. Thus, a plurality of battery modules 20 and 30 provided in the battery pack 100 may be uniformly cooled, and hence, a variation in temperature between battery cells 10 may not occur or may be reduced. Accordingly, the battery cells 10 may be effectively cooled, so that it may be possible to reduce the operational cost required to cool the battery cells 10 of the battery pack 100. Further, the flow of the heat exchange medium may be uniform in the battery pack 100, and hence, a difference in pressure between the battery cells may not occur or may be reduced. Thus, there may exist no portion at which the pressure of the battery cell 10 is locally increased, so that it may be possible to safely use the battery pack 100 for a long period of time.

FIG. 5 illustrates a schematic view showing an inside of the battery pack 100 according to the embodiment.

Referring to FIG. 5, the battery modules 20a and 20b of the first battery module group 20 are spaced apart from each other by a first distance d1, and the battery modules 30a and 30b of the second battery module group 30 are spaced apart from each other by a second distance d2. The first and second battery module groups 20 and 30 are spaced apart from each other by a third distance d3. The third distance d3 may be greater than the first or second distance d1 or d2. The third distance d3 may be approximately similar to or greater than the breadth of the main body portion 151 of the guide member 150.

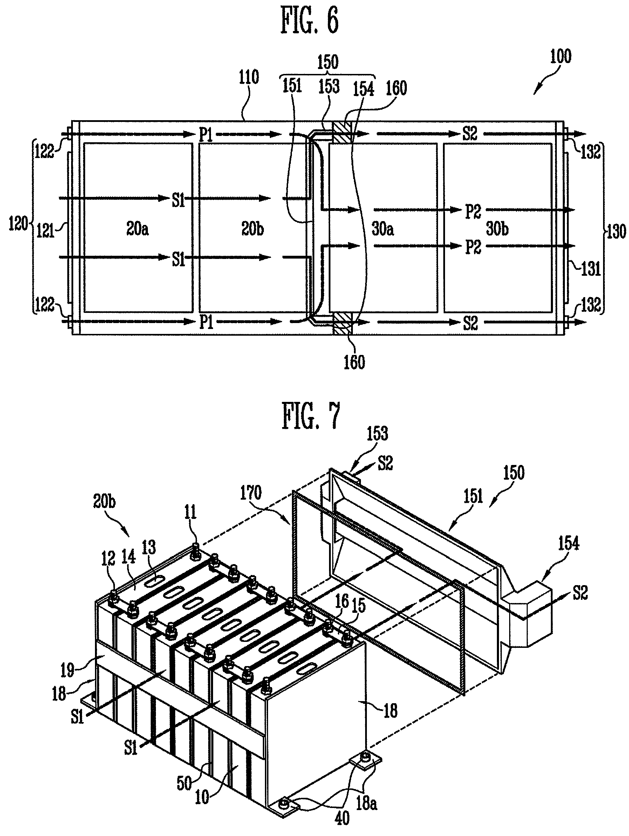

FIG. 6 illustrates a schematic view showing flow paths of the heat exchange medium in the battery pack according to the embodiment.

Referring to FIG. 6, the battery pack 100 includes a first heat exchange flow path S1 passing through the first battery module group 20, a divided heat exchange flow path S2 passing between the outer surface of the second battery module group 30 and the inner surface of the housing 110, one or more second heat exchange flow paths P1 passing between the outer surface of the first battery module group 20 and the inner surface of the housing 110, and a convergence heat exchange flow path P2 passing through the second battery module group 30. The first heat exchange flow path S1 may be divided into one or more divided heat exchange flow paths S2 as a result of passing through the guide member 150. The one or more second heat exchange flow paths P1 may come together as the convergence heat exchange flow path P2 at a back-end of the guide member 150. The divided heat exchange flow path S2 may pass between the outer surface of the second battery module group 30 and the inner surface of the housing 110, and the convergence heat exchange flow path P2 may pass through the second battery module group 30.

The side member 160 may be further provided between the inner surface of the housing 110 and the third battery module 30a of the second battery module group 30 adjacent to the first battery module group 20. The divided heat exchange flow path S2 may pass between the guide member 150 and the side member 160. The through-hole 161 provided in the side member 160 is provided to correspond to the first or second connection tube 153 or 154 of the guide member 150, so that the first and second connection tube 153 or 154 and the through-hole 161 may communicate with each other. The second heat exchange flow path P1 is altered by the side member 160 while passing between the outer surface of the first battery module group 20 and the inner surface of the housing 110. Thus, the plurality of the second heat exchange flow paths P1 respectively flowing along one and the other outer surfaces of the first battery module group 20 may come together as the convergence heat exchange flow path P2 so as to pass through the second battery module group 30.

The housing 110 may include a first surface 110a having the inlet 120 formed therein, and a second surface 110b opposite to the first surface 110a and having the outlet 130 formed therein. The first and second battery module groups 20 and 30 are sequentially aligned between the inlet 120 and the outlet 130. The sides of the battery modules 20a, 20b, 30a, and 30b may face the inlet 120 and the outlet 130. For example, the inlet 120 may include a main inlet 121 provided at a central portion of the first surface 110a, and one or more sub-inlets 122 respectively provided at the left and right sides of the main inlet 121 while being spaced apart from each other with the main inlet 121 interposed therebetween. The outlet 130 may include a main outlet 131 provided at a central portion of the second surface 110b, and one or more sub-outlets 132 respectively provided at the left and right sides of the main outlet 132 while being spaced apart from each other with the main outlet 132 interposed therebetween.

The heat exchange medium that flows through the battery pack 100 from the inlet 120 of the housing 110 is discharged to the outside of the battery pack 110 through the outlet 130 after passing through the portion at which the first battery module group 20 is provided in the housing 110. The heat exchange medium flows along the first and second heat exchange flow path S1 and P1 and passing through the portion at which the second battery module group 30 is provided in the housing 110 along the divided heat exchange flow path S2 and the convergence heat exchange flow path P2. The first heat exchange flow path S1 may communicate with the main inlet 121, and the second heat exchange flow path P1 may communicate with the sub-inlet 122. The divided heat exchange flow path S2 may communicate with the sub-outlet 132, and the convergence heat exchange flow path P2 may communicate with the main outlet 131.

The main inlet 121 is provided opposite to the first battery module group 20. The heat exchange medium exchanges heat with the first and second battery modules 20a and 20b of the first battery module group 20 through the first heat exchange flow path S 1. Subsequently, the relatively heated heat exchange medium is divided by the guide member 150 provided adjacent to the second battery module 20b so as to be discharged through the first and second connection tubes 153 and 154. The heat exchange medium divided and discharged through the first and second connection tubes 153 and 154 is discharged to the sub-outlet 132 by way of the divided heat exchange flow path S2. Thus, the heat exchange medium heated by exchanging heat with the first battery module group 20 does not come into direct contact with the battery cells 10 constituting the third and fourth battery modules 30a and 30b of the second battery module group 30, but is discharged along the inner surface of the housing 110 and the outer surface of the second battery module group 30.

On the other hand, the heat exchange medium that flows in through the sub-inlet 121 does not exchange heat with the battery cells 10, but instead passes between the first battery module group 20 and the inner surface of the housing 110 through the second heat exchange flow path P1. Thus, the temperature of the heat exchange medium that flows in through the sub-inlet 121 may be maintained at almost its original temperature before entering the second battery module group 30. The flow path of the heat exchange medium is altered by the side member 160 between the first and second battery module groups 20 and 30. The heat exchange medium then exchanges heat with the battery cells 10 constituting the third and fourth battery modules 30a and 30b of the second battery module group 30 by passing through the convergence heat exchange flow path P2, thereby cooling the battery cells 10 of the second battery module group 30. The third distance d3 between the first and second battery module groups 20 and 30 is provided to be wider than the first distance d1 or the second distance d2, and the longitudinal length a2 of the first or second connection tube 153 or 154 in the guide member 150 is provided to be narrower than the longitudinal length a1 of the main body portion 151 (see FIG. 3B). Thus, the heat exchange media passing through the respective second heat exchange flow paths P1 may easily come together and pass through the convergence heat exchange flow path P2.

That is, the heat exchange medium exchanging heat with the first battery module group 20 through the first heat exchange flow path S1 is discharged along the outer surface of the second battery module group 30 through the divided heat exchange flow path S2, and the heat exchange medium maintaining the temperature of the heat exchange medium that flows in through the second heat exchange flow path P1 is discharged by passing through, and exchanging heat with, the second battery module group 30 through the convergence heat exchange flow path P2. Thus, the first and second battery module groups 20 and 30 may effectively exchange heat with the heat exchange medium, regardless of their positional relationship with respect to the inlet 120 and the outlet 130, thereby improving the heat exchange efficiency. Further, it may be possible to decrease a difference in temperature between the battery cells 10 and to easily control a difference in pressure between the battery cells 10, which may be caused by the flow of the heat exchange medium.

Although it has been described in this embodiment that the inlet 120 is divided into the main inlet 121 and the sub-inlet 122 and the outlet 130 is divided into the main outlet 131 and the sub-outlet 132, the first and second heat exchange flow paths, the divide heat exchange flow path and the convergence heat exchange flow path are not limited by the inlet 120 and the outlet 130. In other implementations, the path having the heat exchange medium flowing therethrough may be determined by the space of the housing and the arrangement of the first and second battery module groups. For example, in a case where the inlet 120 is not divided into the main inlet 121 and the sub-inlet 122 but provided to have a wide width, the heat exchange medium facing the first battery module group 20 among the heat exchange media flowing in through the inlet 120 may pass through the first heat exchange flow path S 1, and other heat exchange media may pass through the second heat exchange flow path P1. A similar structure may be provided with respect to the outlet 130.

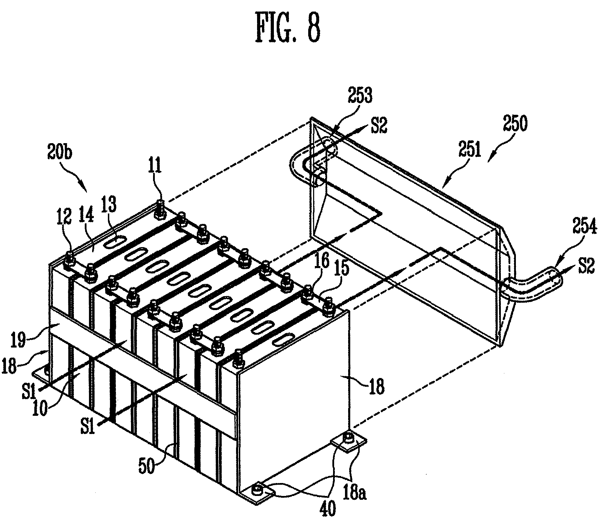

Hereinafter, another embodiment will be described with reference to FIGS. 7 and 8. Contents of these embodiments, except the following contents, are similar to those of the embodiment described with reference to FIGS. 1 to 6, and therefore, their detailed descriptions will not be repeated.

FIG. 7 is a perspective view showing a battery module and a guide member according to another embodiment.

Referring to FIG. 7, a sealing member 170 may be further provided between the battery module 20b of the first battery module group 20 and the guide member 150. For example, the sealing member 170 may include any one or more of sponge, rubber, and adhesive. The heat exchange medium may be discharged by passing through the second battery module 20b of the first battery module group 20 (S1) and then divided by the guide member 150 (S2). In this case, the sealing member 170 is further provided between the guide member 150 and the second battery module 20b, so that the relatively heated heat exchange medium does not flow back to the outside of the second battery module 20b but is discharged only through the guide member 150. Thus, the heat exchange medium flows along the outer surface of the first battery module group 20. The heat exchange medium that flows along the outer surface of the first battery module group 20 has no influence on the temperature of the heat exchange medium which does not exchange heat with the first battery module group 20, thereby improving the heat exchange efficiency of the battery pack.

FIG. 8 is a perspective view showing a battery module and a guide member according to still another embodiment.

Referring to FIG. 8, the guide member 250 provided adjacent to the second battery module 20 of the first battery module group 20 includes a main body portion 251, and first and second connection tubes 253 and 254 connected to the main body portion 251. In this case, the cross-section of the first and second connection tubes 253 and 254 of the guide member 250 may be formed in a circular shape having a through-hole therein. The first and second connection tubes 253 and 254 may be flexibly modified according to the physical property and flow of the heat exchange medium. Thus, the guide member 250 may be variously applied.

By way of summation and review, a battery module may be configured to include a plurality of battery cells. The battery cell transmits energy to an external electronic device through an electrochemical reaction, and the battery cell generates heat during the electrochemical reaction. If the heat accumulates, the battery cell may deteriorate, and the safety of the battery cell may become an issue. Therefore, it is desirable to control the temperature of the battery cell.

Embodiments provide a battery pack having improved heat exchange efficiency, using a new member. Embodiments also provide a battery pack capable of improving reliability and safety by minimizing the difference in temperature between battery cells.

## Claims

1. A battery pack (100), comprising:
a first battery module group (20) including one or more battery modules (20a, 20b);
a second battery module group (30) including one or more battery modules (30a, 30b), and aligned with the first battery module group (20);
a housing (110) accommodating the first and second battery module groups (20, 30) therein; and
a guide member (150) between the first and second battery module groups (20, 30), and adjacent to one of the battery modules (20b) of the first battery module group (20),
wherein the guide member (150) divides a flow path of a heat exchange medium passing through the first battery module group (20);
**characterized by**
the guide member (150) including
a main body portion (151) having one surface opened to form a space portion (152) therein, and
first and second connection tubes (153, 154) respectively provided at a first side of the main body portion (151) and a second side opposite to the first side of the main body portion (151).

2. The battery pack as claimed in claim 1, wherein:
the one opened surface of the main body portion (151) faces the first battery module group (20), and
the first and second connection tubes (153, 154) are extended to face an opposite direction with respect to the first battery module group (20).

3. The battery pack as claimed in claim 1 or 2, wherein:
openings (155) are provided at each of the first and second sides of the main body portion (151), and
the first and second connection tubes (153, 154) are connected to respective openings (155) at the first and second sides.

4. The battery pack as claimed in one of claims 1 to 3, wherein at least one portion of the heat exchange medium passing through the first battery module group (20) is discharged through the first and second connection tubes (153, 154) via the space portion of the guide member (150).

5. The battery pack as claimed in claim 1 to 4, wherein a cross-section of the first and second connection tubes (153, 154) is formed in a polygonal or circular shape having a through-hole therein and/or further comprising one or more side members (160), each having a through-hole therein, wherein the one or more side members (160) are adjacent to the guide member (150), and the through-hole has a size corresponding to a respective one of the first and second connection tubes (153, 154).

6. The battery pack as claimed in one of claims 1 to 5, wherein a sealing member (170) is between the battery module (20b) of the first battery module group (20) and the guide member (150).

7. The battery pack as claimed in one of claims 1 to 6, wherein:
the housing (110) includes a first surface having an inlet (120) formed therein, and a second surface opposite to the first surface and having an outlet (130) formed therein, and
the first and second battery module groups (20, 30) are sequentially aligned between the inlet (120) and the outlet (130), and sides of the battery module (100) face the inlet (120) and the outlet (130).

8. The battery pack as claimed in claim 7, wherein:
the inlet (120) includes a main inlet at a central portion of the first surface, and one or more sub-inlets at left and right sides, respectively, of the main inlet and spaced apart from each other, with the main inlet therebetween and/or wherein the outlet (130) includes a main outlet at a central portion of the second surface, and one or more sub-outlets at left and right sides, respectively, of the main outlet and spaced apart from each other, with the main outlet therebetween.

9. The battery pack as claimed in claim 8, wherein:
the first and second battery module groups (20, 30) are spaced apart from at least one portion of an inner surface of the housing (110), and
the sub-inlets or the sub-outlets communicate with a space between the inner surface of the housing (110) and the first and second battery module groups (20, 30).

10. The battery pack as claimed in one of claims 1 to 9, wherein:
the battery modules (20a, 20b) of the first battery module group (20) are spaced apart from each other by a first distance,
the battery modules (30a, 30b) of the second battery module group (30) are spaced apart from each other by a second distance,
the first and second battery module groups (20, 30) are spaced apart from each other by a third distance, and
the third distance is greater than the first or second distance.

11. The battery pack as claimed in one of claims 1 to 10, comprising:
a first heat exchange flow path (S1) passing through the first battery module group (20);
a divided heat exchange flow path (S2) passing between an outer surface of the second battery module group (30) and an inner surface of the housing (110);
one or more second heat exchange flow paths (P1) passing between an outer surface of the first battery module group (20) and the inner surface of the housing (110); and
a convergence heat exchange flow path (P2) passing through the second battery module group (30),
wherein the first heat exchange flow path (S1) is divided into the divided heat exchange flow path (S2) by passing through the guide member (150), and the one or more second heat exchange flow paths (P1) converge to form the convergence heat exchange flow path (P2) at a back-end of the guide member (150).

12. The battery pack as claimed in claim 11, wherein:
the divided heat exchange flow path (S2) passes between the outer surface of the second battery module group (30) and the inner surface of the housing (110), and
the convergence heat exchange flow path (P2) passes through the second battery module group (30).

13. The battery pack as claimed in claim 11, wherein:
the housing (110) includes a first surface having an inlet (120) therein, and a second surface opposite to the first surface and having an outlet (130) therein, and
the first and second battery module groups (20, 30) are sequentially aligned between the inlet (120) and the outlet (130), and
sides of the battery modules (20a, 20b, 30a, 30b) face the inlet (120) and the outlet (130).

14. The battery pack as claimed in claims 8 and 11, wherein:
the first heat exchange flow path (S1) communicates with the main inlet,
the second heat exchange flow path (P1) communicates with the sub-inlet,
the divided heat exchange flow path (S2) communicates with the sub-outlet, and
the convergence heat exchange flow path (P2) communicates with the main outlet.

## Patentansprüche

1. Batteriepack (100), das Folgendes umfasst:
eine erste Batteriemodulgruppe (20), die ein oder mehrere Batteriemodule (20a, 20b) umfasst;
eine zweite Batteriemodulgruppe (30), die ein oder mehrere Batteriemodule (30a, 30b) umfasst und mit der ersten Batteriemodulgruppe (20) ausgerichtet ist;
ein Gehäuse (110), das die erste und die zweite Batteriemodulgruppe (20, 30) darin aufnimmt; und
ein Führungselement (150) zwischen der ersten und der zweiten Batteriemodulgruppe (20, 30) und das einem von den Batteriemodulen (20b) von der ersten Batteriemodulgruppe (20) benachbart ist,
wobei das Führungselement (150) einen Strömungsweg eines Wärmeaustauschmittels teilt, das die erste Batteriemodulgruppe (20) durchquert;
**gekennzeichnet durch**:
das Führungselement (150), das Folgendes umfasst:
einen Hauptkörperabschnitt (151), der eine Fläche aufweist, die geöffnet ist, um einen Raumabschnitt (152) darin zu bilden, und
erste und zweite Verbindungsrohre (153, 154), die an einer ersten Seite des Hauptkörperabschnitts (151) beziehungsweise einer zweiten Seite bereitgestellt sind, die der ersten Seite des Hauptkörperabschnitts (151) entgegengesetzt ist.

2. Batteriepack nach Anspruch 1, wobei:
die eine geöffnete Fläche des Hauptkörperabschnitts (151) der ersten Batteriemodulgruppe (20) zugewandt ist, und
die ersten und zweiten Verbindungsrohre (153, 154) erweitert sind, um einer Richtung zugewandt zu sein, die der ersten Batteriemodulgruppe (20) entgegengesetzt ist.

3. Batteriepack nach Anspruch 1 oder 2, wobei:
Öffnungen (155) an jeder von der ersten und der zweiten Seite des Hauptkörperabschnitts (151) bereitgestellt sind, und
die ersten und zweiten Verbindungsrohre (153, 154) mit entsprechenden Öffnungen (155) an den ersten und zweiten Seiten verbunden sind.

4. Batteriepack nach einem der Ansprüche 1 bis 3, wobei mindestens ein Teil des Wärmeaustauschmittels, das die erste Batteriemodulgruppe (20) durchquert, durch die ersten und zweiten Verbindungsrohre (153, 154) über den Raumabschnitt des Führungselements (150) abgelassen wird.

5. Batteriepack nach Anspruch 1 bis 4, wobei ein Querschnitt der ersten und zweiten Verbindungsrohre (153, 154) in einer vieleckigen oder kreisförmigen Form gebildet ist, die ein Durchgangsloch darin aufweist und/oder ferner ein oder mehrere Seitenelemente (160) umfasst, die jeweils ein Durchgangsloch darin aufweisen, wobei das eine oder die mehreren Seitenelemente (160) dem Führungselement (150) benachbart sind, und das Durchgangsloch eine Größe aufweist, die einem entsprechenden von den ersten und zweiten Verbindungsrohren (153, 154) entspricht.

6. Batteriepack nach einem der Ansprüche 1 bis 5, wobei ein Dichtungselement (170) sich zwischen dem Batteriemodul (20b) der ersten Batteriemodulgruppe (20) und dem Führungselement (150) befindet.

7. Batteriepack nach einem der Ansprüche 1 bis 6, wobei:
das Gehäuse (110) eine erste Fläche, die einen Eintritt (120) aufweist, der darin gebildet ist, und eine zweite Fläche umfasst, die der ersten Fläche entgegengesetzt ist und einen Austritt (130) aufweist, der darin gebildet ist, und
die ersten und zweiten Batteriemodulgruppen (20, 30) aufeinanderfolgend zwischen dem Eintritt (120) und dem Austritt (130) ausgerichtet sind und Seiten des Batteriemoduls (100) dem Eintritt (120) und dem Austritt (130) zugewandt sind.

8. Batteriepack nach Anspruch 7, wobei:
der Eintritt (120) einen Haupteintritt an einem mittleren Abschnitt der ersten Fläche und einen oder mehrere Untereintritte an linken beziehungsweise rechten Seiten des Haupteintritts, und die voneinander beabstandet sind, mit dem Haupteintritt dazwischen umfasst und/oder wobei der Austritt (130) einen Hauptaustritt an einem mittleren Abschnitt der zweiten Fläche und einen oder mehrere Unteraustritte an linken beziehungsweise rechten Seiten des Hauptaustritts, und die voneinander beabstandet sind, mit dem Hauptaustritt dazwischen umfasst.

9. Batteriepack nach Anspruch 8, wobei:
die ersten und zweiten Batteriemodulgruppen (20, 30) von mindestens einem Abschnitt einer Innenfläche des Gehäuses (110) beabstandet sind, und
die Untereintritte oder die Unteraustritte mit einem Raum zwischen der Innenfläche des Gehäuses (110) und den ersten und zweiten Batteriemodulgruppen (20, 30) in Verbindung stehen.

10. Batteriepack nach einem der Ansprüche 1 bis 9, wobei:
die Batteriemodule (20a, 20b) der ersten Batteriemodulgruppe (20) um einen ersten Abstand voneinander beabstandet sind,
die Batteriemodule (30a, 30b) der zweiten Batteriemodulgruppe (20) um einen zweiten Abstand voneinander beabstandet sind,
die ersten und zweiten Batteriemodulgruppen (20, 30) um einen dritten Abstand voneinander beabstandet sind, und
der dritte Abstand größer ist als der erste oder der zweite Abstand.

11. Batteriepack nach einem der Ansprüche 1 bis 10, das Folgendes umfasst:
einen ersten Wärmeaustausch-Strömungsweg (S1), der die Batteriemodulgruppe (20) durchquert;
einen geteilten Wärmeaustausch-Strömungsweg (S2), der zwischen einer Außenfläche der zweiten Batteriemodulgruppe (30) und einer Innenfläche des Gehäuses (110) verläuft;
einen oder mehrere zweite Wärmeaustausch-Strömungswege (P1), die zwischen einer Außenfläche der ersten Batteriemodulgruppe (20) und der Innenfläche des Gehäuses (110) verlaufen; und
einen Konvergenzwärmeaustausch-Strömungsweg (P2), der durch die zweite Batteriemodulgruppe (30) verläuft,
wobei der erste Wärmeaustausch-Strömungsweg (S1) in den geteilten Wärmeaustausch-Strömungsweg (S2) durch Durchqueren des Führungselements (150) geteilt wird, und der eine oder die mehreren zweiten Wärmeaustausch-Strömungswege (P1) konvergieren, um den Konvergenzwärmeaustausch-Strömungsweg (P2) an einem hinteren Ende des Führungselements (150) zu bilden.

12. Batteriepack nach Anspruch 11, wobei:
der geteilte Wärmeaustausch-Strömungsweg (S2) zwischen der Außenfläche der zweiten Batteriemodulgruppe (30) und der Innenfläche des Gehäuses (110) verläuft, und
der Konvergenzwärmeaustausch-Strömungsweg (P2) durch die zweite Batteriemodulgruppe (30) verläuft.

13. Batteriepack nach Anspruch 11, wobei:
das Gehäuse (110) eine erste Fläche, die einen Eintritt (120) darin aufweist, und eine zweite Fläche umfasst, die der ersten Fläche entgegengesetzt ist und einen Austritt (130) darin aufweist, und
die ersten und zweiten Batteriemodulgruppen (20, 30) aufeinanderfolgend zwischen dem Eintritt (120) und dem Austritt (130) ausgerichtet sind, und
Seiten der Batteriemodule (20a, 20b, 30a, 30b) dem Eintritt (120) und dem Austritt (130) zugewandt sind.

14. Batteriepack nach Anspruch 8 und 11, wobei:
der erste Wärmeaustausch-Strömungsweg (S1) mit dem Haupteintritt in Verbindung steht,
der zweite Wärmeaustausch-Strömungsweg (P1) mit dem Untereintritt in Verbindung steht,
der geteilte Wärmeaustausch-Strömungsweg (S2) mit dem Unteraustritt in Verbindung steht, und
der Konvergenzwärmeaustausch-Strömungsweg (P2) mit dem Hauptaustritt in Verbindung steht.

## Revendications

1. Bloc de batteries (100), comprenant :
un premier groupe de modules de batterie (20) comprenant un ou plusieurs modules de batterie (20a, 20b) ;
un deuxième groupe de modules de batterie (30) comprenant un ou plusieurs modules de batterie (30a, 30b), et aligné avec le premier groupe de modules de batterie (20) ;
un logement (110) logeant les premier et deuxième groupes de modules de batterie (20, 30) dans celui-ci ; et
un élément de guidage (150) entre les premier et deuxième groupes de modules de batterie (20, 30), et adjacent à l'un des modules de batterie (20b) du premier groupe de modules de batterie (20),
dans lequel l'élément de guidage (150) divise un trajet d'écoulement d'un milieu d'échange de chaleur passant à travers le premier groupe de modules de batterie (20) ;
**caractérisé en ce que**
l'élément de guidage (150) comprend
une partie de corps principale (151) comportant une surface ouverte pour former une partie d'espace (152) dans celle-ci, et
des premier et deuxième tubes de liaison (153, 154) respectivement prévus d'un premier côté de la partie de corps principale (151) et d'un deuxième côté opposé au premier côté de la partie de corps principale (151).

2. Bloc de batteries selon la revendication 1, dans lequel :
ladite une surface ouverte de la partie de corps principale (151) fait face au premier groupe de modules de batterie (20), et
les premier et deuxième tubes de liaison (153, 154) s'étendent de manière à être orientés dans une direction opposée par rapport au premier groupe de modules de batterie (20).

3. Bloc de batteries selon la revendication 1 ou 2, dans lequel :
des ouvertures (155) sont prévues au niveau de chacun des premier et deuxième côtés de la partie de corps principale (151), et
les premier et deuxième tubes de liaison (153, 154) sont reliés aux ouvertures (155) respectives au niveau des premier et deuxième côtés.

4. Bloc de batteries selon l'une des revendications 1 à 3, dans lequel au moins une partie du milieu d'échange de chaleur passant à travers le premier groupe de modules de batterie (20) est déchargée à travers les premier et deuxième tubes de liaison (153, 154) par l'intermédiaire de la partie d'espace de l'élément de guidage (150).

5. Bloc de batteries selon les revendications 1 à 4, dans lequel une section des premier et deuxième tubes de liaison (153, 154) est réalisée en une forme polygonale ou circulaire comportant un trou traversant dans celle-ci et/ou comprenant en outre un ou plusieurs éléments latéraux (160), comportant chacun un trou traversant dans ceux-ci, dans lequel lesdits un ou plusieurs éléments latéraux (160) sont adjacents à l'élément de guidage (150), et le trou traversant a une taille correspondant à l'un respectif des premier et deuxième tubes de liaison (153, 154).

6. Bloc de batteries selon l'une des revendications 1 à 5, dans lequel un élément d'étanchéité (170) se trouve entre le module de batterie (20b) du premier groupe de modules de batterie (20) et l'élément de guidage (150).

7. Bloc de batteries selon l'une des revendications 1 à 6, dans lequel :
le logement (110) comprend une première surface dans laquelle une entrée (120) est formée et une deuxième surface opposée à la première surface et dans laquelle une sortie (130) est formée, et
les premier et deuxième groupes de modules de batterie (20, 30) sont alignés séquentiellement entre l'entrée (120) et la sortie (130), et les côtés du module de batterie (100) font face à l'entrée (120) et à la sortie (130).

8. Bloc de batteries selon la revendication 7, dans lequel :
l'entrée (120) comprend une entrée principale dans une partie centrale de la première surface, et une ou plusieurs entrées secondaires au niveau des côtés gauche et droit, respectivement, de l'entrée principale et espacées les unes des autres, avec l'entrée principale entre elles, et/ou dans lequel la sortie (130) comprend une sortie principale dans une partie centrale de la deuxième surface, et une ou plusieurs sorties secondaires au niveau des côtés gauche et droit, respectivement, de la sortie principale et espacées les unes des autres, avec la sortie principale entre elles.

9. Bloc de batteries selon la revendication 8, dans lequel :
les premier et deuxième groupes de modules de batterie (20, 30) sont espacés d'au moins une partie d'une surface intérieure du logement (110), et
les entrées secondaires ou les sorties secondaires communiquent avec un espace entre la surface intérieure du logement (110) et les premier et deuxième groupes de modules de batterie (20, 30).

10. Bloc de batteries selon l'une des revendications 1 à 9, dans lequel :
les modules de batterie (20a, 20b) du premier groupe de modules de batterie (20) sont espacés l'un de l'autre d'une première distance,
les modules de batterie (30a, 30b) du deuxième groupe de modules de batterie (30) sont espacés l'un de l'autre d'une deuxième distance,
les premier et deuxième groupes de modules de batterie (20, 30) sont espacés l'un de l'autre d'une troisième distance, et
la troisième distance est plus grande que la première ou la deuxième distance.

11. Bloc de batteries selon l'une des revendications 1 à 10, comprenant :
un premier trajet d'écoulement d'échange de chaleur (S1) passant à travers le premier groupe de modules de batterie (20) ;
un trajet d'écoulement d'échange de chaleur divisé (S2) passant entre une surface extérieure du deuxième groupe de modules de batterie (30) et une surface intérieure du logement (110) ;
un ou plusieurs deuxièmes trajets d'écoulement d'échange de chaleur (P1) passant entre une surface extérieure du premier groupe de modules de batterie (20) et la surface intérieure du logement (110) ; et
un trajet d'écoulement d'échange de chaleur de convergence (P2) passant à travers le deuxième groupe de modules de batterie (30),
dans lequel le premier trajet d'écoulement d'échange de chaleur (S1) est divisé en le trajet d'écoulement d'échange de chaleur divisé (S2) en passant à travers l'élément de guidage (150), et lesdits un ou plusieurs deuxièmes trajets d'écoulement d'échange de chaleur (P1) convergent pour former le trajet d'écoulement d'échange de chaleur de convergence (P2) à une extrémité terminale de l'élément de guidage (150).

12. Bloc de batteries selon la revendication 11, dans lequel :
le trajet d'écoulement d'échange de chaleur divisé (S2) passe entre la surface extérieure du deuxième groupe de modules de batterie (30) et la surface intérieure du logement (110), et
le trajet d'écoulement d'échange de chaleur de convergence (P2) passe à travers le deuxième groupe de modules de batterie (30).

13. Bloc de batteries selon la revendication 11, dans lequel :
le logement (110) comprend une première surface comportant une entrée (120) dans celle-ci, et une deuxième surface opposée à la première surface et comportant une sortie (130) dans celle-ci, et
les premier et deuxième groupes de modules de batterie (20, 30) sont alignés séquentiellement entre l'entrée (120) et la sortie (130), et
les côtés des modules de batterie (20a, 20b, 30a, 30b) font face à l'entrée (120) et à la sortie (130).

14. Bloc de batteries selon les revendications 8 et 11, dans lequel :
le premier trajet d'écoulement d'échange de chaleur (S1) communique avec l'entrée principale,
le deuxième trajet d'écoulement d'échange de chaleur (P1) communique avec l'entrée secondaire,
le trajet d'écoulement d'échange de chaleur divisé (S2) communique avec la sortie secondaire, et
le trajet d'écoulement d'échange de chaleur de convergence (P2) communique avec la sortie principale.
